# EUROPÄISCHE PATENTSCHRIFT

(11) **EP 4 141 255 B1**
(45) Veröffentlichungstag und Bekanntmachung des Hinweises auf die Patenterteilung: **17.04.2024**
(21) Anmeldenummer: 21193580.4
(22) Anmeldetag: 27.08.2021
(51) Int. Cl.: F03D 13/10, F03D 80/50

(54) **WINDENERGIEANLAGE, VERFAHREN ZUR MONTAGE EINES TRANSFORMATORS UND WINDENERGIEANLAGEN-GONDEL**
WIND TURBINE, METHOD FOR ASSEMBLING A TRANSFORMER AND A WIND TURBINE NACELLE
ÉOLIENNE, PROCÉDÉ DE MONTAGE D'UN TRANSFORMATEUR ET NACELLE D'ÉOLIENNE

(43) Veröffentlichungstag der Anmeldung: 01.03.2023
(73) Patentinhaber: Wobben Properties GmbH, 26607 Aurich (DE)
(72) Erfinder: KRAUSCHE, Thomas, 26605 Aurich (DE); COORDES, Ihno, 26632 Ihlow (DE); KNOOP, Frank, 26607 Aurich (DE)
(74) Vertreter: Eisenführ Speiser

(56) Entgegenhaltungen:
- EP-A1- 3 372 823
- WO-A1-2019/100146
- WO-A2-2011/012683
- KR-A- 20100 077 744
- US-A1- 2017 045 038
- US-A1- 2020 072 184

## Beschreibung

Die vorliegende Erfindung betrifft eine Windenergieanlage, ein Verfahren zur Montage eines Transformators sowie eine Windenergieanlagen-Gondel.

Eine Windenergieanlage weist typischerweise einen Turm, eine Gondel sowie einen aerodynamischen Rotor mit mehreren Rotorblättern auf. Die Gondel weist typischerweise den elektrischen Generator sowie andere elektrische und/oder elektronische Komponenten auf. In einigen Fällen ist ebenfalls ein Transformator in der Gondel vorgesehen.

Zum Transport von Komponenten, welche in der Gondel vorgesehen sind, beschreibt beispielsweise EP 1 101 934 A4 eine Gondel einer Windenergieanlage mit einer verschließbaren Öffnung in der Gondel, um Komponenten durch diese Öffnung in die Gondel zu befördern. Derartige Komponenten sind beispielsweise ein Getriebe oder ein Generator. Die Größe der Öffnung muss daher an die Größe der maximal zu transportierenden Komponente angepasst sein. Beispiele für Lösungen aus dem Stand der Technik sind in den Dokumenten US 2020/072184 A1 und EP 3 372 823 A1 zu finden.

Es ist eine Aufgabe der vorliegenden Erfindung, eine Windenergieanlage sowie eine Windenergieanlagen-Gondel vorzusehen, welche einen verbesserten Transport von Komponenten zu der Gondel erlaubt.

Diese Aufgabe wird durch eine Windenergieanlage nach Anspruch 1, ein Verfahren zur Montage eines Transformators nach Anspruch 5 sowie durch eine Windenergieanlagen-Gondel nach Anspruch 6 gelöst.

Somit wird eine Windenergieanlage mit einer Gondel mit einem Gondelboden vorgesehen. Die Windenergieanlage weist ferner einen aerodynamischen Rotor mit mindestens zwei Rotorblättern und einen Turm auf, auf welchem die Gondel angeordnet ist. Im Gondelboden ist mindestens eine erste und zweite Öffnung vorgesehen. Die erste Öffnung dient zum Transport von ersten Komponenten der Windenergieanlage und weist entsprechende erste Abmessungen auf. Die zweite Öffnung weist zweite Abmessungen auf und dient zum Transport eines Transformators in die Gondel hinein. Der Transformator weist einen Boden auf, welcher die zweite Öffnung verschließt, wenn der Transformator durch die zweite Öffnung in die Gondel befördert und in der Gondel montiert worden ist. Der Transformator kann somit vom Boden aus durch die zweite Öffnung (Transformator-Öffnung) in das Innere der Gondel transportiert werden.

Gemäß einem Aspekt der vorliegenden Erfindung weist der Transformator eine Transformator-(Öl)wanne auf. Hierbei kann beispielsweise der Boden des Transformators als (Öl)wanne ausgestaltet sein. Alternativ dazu kann zusätzlich zu dem Boden des Transformators eine Transformator-(ÖI)wanne vorgesehen sein. Das Vorsehen der Transformator-(Öl)wanne ist vorteilhaft, weil damit sichergestellt werden kann, dass eventuell auslaufende Flüssigkeiten keine Umweltschäden verursachen. Wenn die (Öl)wanne den Transformatorboden darstellt oder mit dem separaten Transformatorboden verbunden ist, dann kann der Transformator zusammen mit der (Öl)wanne ausgetauscht werden.

Die Transformator-Wanne kann z. B. als Ölwanne ausgestaltet sein.

Gemäß einem weiteren Aspekt der vorliegenden Erfindung kann der Transformatorboden mittels Befestigungselementen in oder an dem Gondelboden im Bereich der zweiten Öffnung vorgesehen sein. Damit kann eine sichere und lösbare Befestigung des Transformators in oder an dem Gondelboden vorgesehen sein.

Gemäß einem weiteren Aspekt der vorliegenden Erfindung sind die Abmessungen des Transformatorbodens an die Abmessungen der zweiten Öffnung angepasst, so dass der Transformator durch die zweite Öffnung in das Gondelinnere angehoben bzw. befördert werden kann.

Die Erfindung betrifft ebenfalls ein Verfahren zur Montage eines Transformators in einer Windenergieanlagen-Gondel. Der Transformator mit einem Transformatorboden wird angehoben und durch den Gondelboden mit einer ersten und zweiten Öffnung befördert. Der Transformator wird hierbei durch die zweite Öffnung in das Innere der Gondel angehoben bzw. befördert. Der Transformator wird arretiert, so dass der Transformatorboden die zweite Öffnung verschließt.

Die Erfindung betrifft ebenfalls eine Windenergieanlagen-Gondel mit einem Gondelboden mit einer ersten und zweiten Öffnung. Die erste Öffnung weist Abmessungen auf, die es erlauben, erste Komponenten hindurchzuführen. Die zweite Öffnung ist größer als die erste Öffnung und weist Abmessungen auf, die es erlauben, den Transformator hindurchzuführen.

Der Transformatorboden kann gemäß einem Aspekt der Erfindung einen Teil des Gondelbodens darstellen.

Die Erfindung betrifft ebenfalls einen Transformator mit einem Transformatorboden, welcher an die Abmessungen der zweiten Öffnung angepasst ist, so dass der Transformatorboden die zweite Öffnung verschließt, wenn der Transformator innerhalb der Gondel montiert worden ist. Zum Austausch des Transformators muss der Transformator dann lediglich durch die zweite Öffnung nach unten abgelassen werden. In oder an dem Transformatorboden kann ein Verriegelungselement oder Befestigungselement vorgesehen sein, welches eine Verriegelung des Transformatorbodens in oder an dem Gondelboden erlaubt. Optional kann der Transformator eine Transformatorwanne aufweisen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine weitere perspektivische Ansicht einer Gondel einer Windenergieanlage gemäß einem ersten Ausführungsbeispiel,
- Fig. 3: zeigt eine perspektivische Ansicht eines Gondelbodens einer Gondel gemäß einem zweiten Ausführungsbeispiel,
- Fig. 4: zeigt eine schematische Ansicht eines Ausschnitts eines Gondelbodens gemäß einem dritten Ausführungsbeispiel,
- Fig. 5: zeigt eine schematische Darstellung eines Transformators im Inneren einer Gondel einer Windenergieanlage,
- Fig. 6: zeigt eine Draufsicht auf einen Transformator im Inneren einer Gondel, und
- Fig. 7: zeigt eine schematische Darstellung eines Transformators bei der Montage in einer Gondel einer Windenergieanlage.

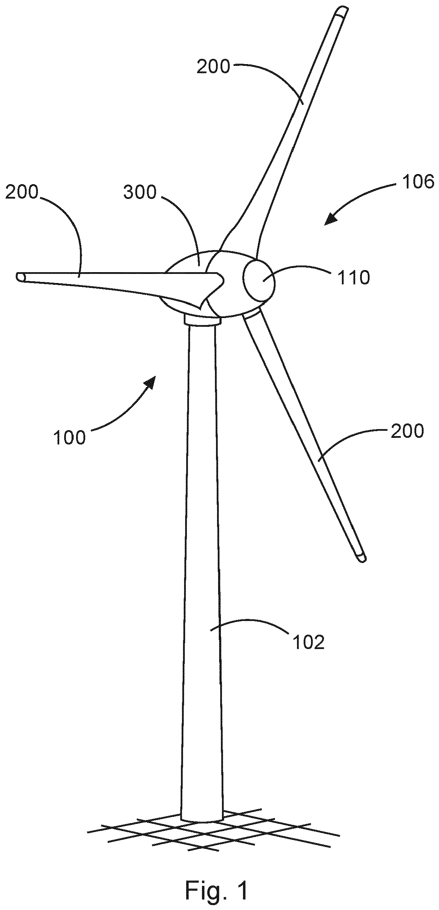

Fig. 1 zeigt eine schematische Darstellung einer Windenergieanlage gemäß der Erfindung. Die Windenergieanlage 100 weist einen Turm 102 und eine Gondel 300 auf dem Turm 102 auf. An der Gondel 300 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 300 angeordnet und erzeugt elektrische Energie. Die Pitchwinkel der Rotorblätter 200 können durch Pitchmotoren an den Rotorblattwurzeln der jeweiligen Rotorblätter 200 verändert werden.

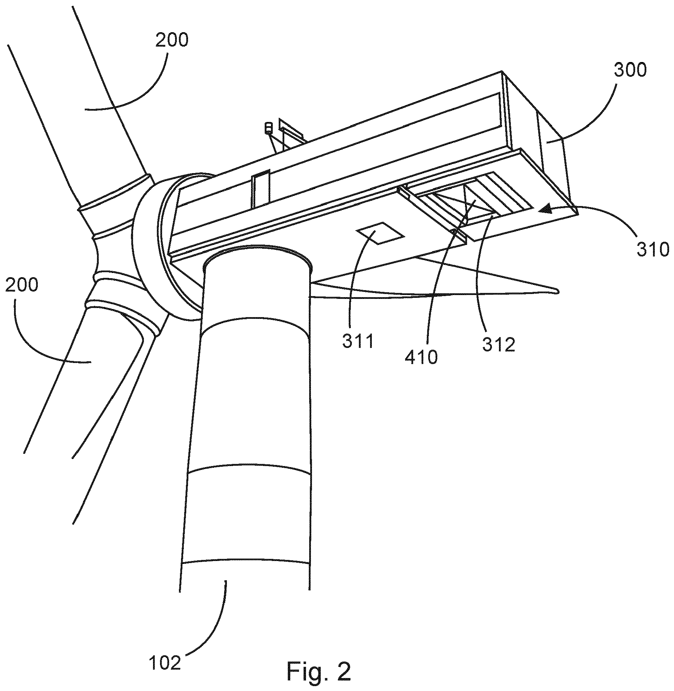

Fig. 2 zeigt eine weitere perspektivische Ansicht einer Gondel einer Windenergieanlage gemäß einem ersten Ausführungsbeispiel. Die Gondel 300 ist auf einem Turm 102 vorgesehen und mit dem aerodynamischen Rotor mit den Rotorblättern 200 gekoppelt. Die Gondel 300 weist einen elektrischen Generator auf, der direkt oder indirekt mit dem aerodynamischen Rotor 106 gekoppelt ist. Ferner kann die Gondel 300 Leistungselektronikmodule wie beispielsweise Gleichrichter und Umrichter aufweisen. Des Weiteren kann die Gondel 300 einen Transformator 400 aufweisen. Die Gondel 300 weist einen Gondelboden 310 mit einer ersten Öffnung 311 und einer zweiten Öffnung 312 auf. Die erste Öffnung 311 ist kleiner als die zweite Öffnung 312. Die erste Öffnung 311 weist erste Abmessungen auf und dient dazu, Komponenten der Windenergieanlage beispielsweise mittels einer Winde ins Innere der Gondel zu befördern. Die zweite Öffnung 312 weist zweite Abmessungen auf und dient dazu, einen Transformator 400 der Windenergieanlage ebenfalls beispielsweise mittels einer Winde in das Innere der Gondel zu befördern. Die zweite Öffnung 312 wird dann durch einen Boden 410 des Transformators verschlossen, wenn der Transformator in der Gondel 300 montiert worden ist. Der Boden 410 des Transformators 400 bildet somit einen Verschluss der Öffnung 312. Dies ist vorteilhaft, weil damit keine weitere Luke zum Verschließen der zweiten Öffnung 312 benötigt wird.

Zur Montage des Transformators 400 muss der Transformator 400 lediglich beispielsweise mittels einer Winde, die innerhalb der Gondel 300 vorgesehen sein kann, nach oben transportiert werden. Der Transformator 400 wird dann durch die zweite Öffnung 312 ins Innere der Gondel 300 transportiert. Nachdem der Transformator 400 in die Gondel 300 transportiert worden ist, kann der Boden 410 des Transformators 400 mittels einer Arretier- oder Befestigungseinheit befestigt werden, so dass der Boden 410 des Transformators 400 die zweite Öffnung 312 (nach unten) verschließt. Dies ist insbesondere für die Montage des Transformators 400 vorteilhaft, weil der Transformator 400 nicht mehr innerhalb der Gondel weitertransportiert werden muss, sondern lediglich an der Stelle montiert werden kann, wo er durch die zweite Öffnung 312 angehoben worden ist.

Zur Montage eines Transformators 400 in einer Gondel 300 einer Windenergieanlage 100 muss der Transformator 400 beispielsweise mittels einer Winde nach oben angehoben werden. Hierbei wird er durch eine zweite Öffnung 312 in dem Gondelboden 310 ins Innere der Gondel 300 angehoben. Anschließend wird der Transformator 400 arretiert, so dass der Boden des Transformators 400 die Öffnung 312 im Gondelboden 310 verschließt.

Der Transformator 400 kann optional eine Wanne 450 aufweisen. Hierbei kann der Boden 410 des Transformators 400 als Wanne 450 ausgestaltet sein. Alternativ dazu kann eine Wanne zusätzlich zu dem Boden vorgesehen sein.

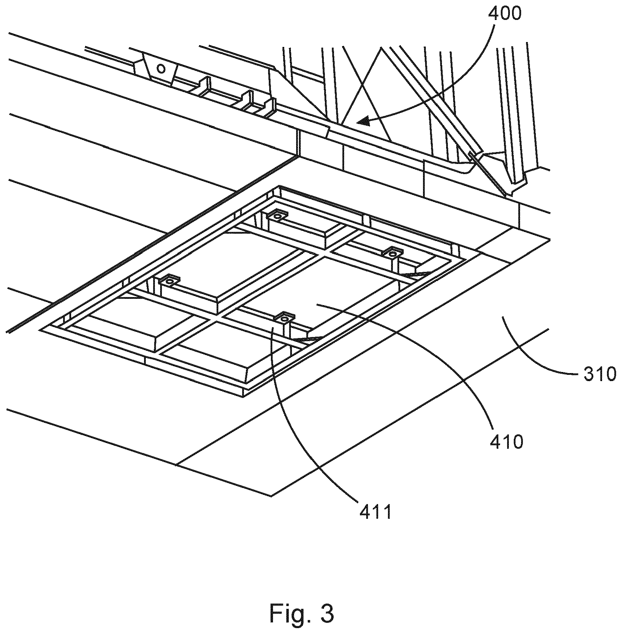

Fig. 3 zeigt eine perspektivische Ansicht eines Gondelbodens einer Gondel gemäß einem zweiten Ausführungsbeispiel. In Fig. 3 ist insbesondere der Gondelboden 310, ein Transformator 400 innerhalb der Gondel 300 und ein Transformatorboden 410 vorgesehen, welcher die zweite Öffnung 312 verschließt.

Optional kann der Boden 410 eine Mehrzahl von Streben 411 aufweisen. Diese Streben 411 können beispielsweise zur Erhöhung der Stabilität des Transformatorbodens dienen.

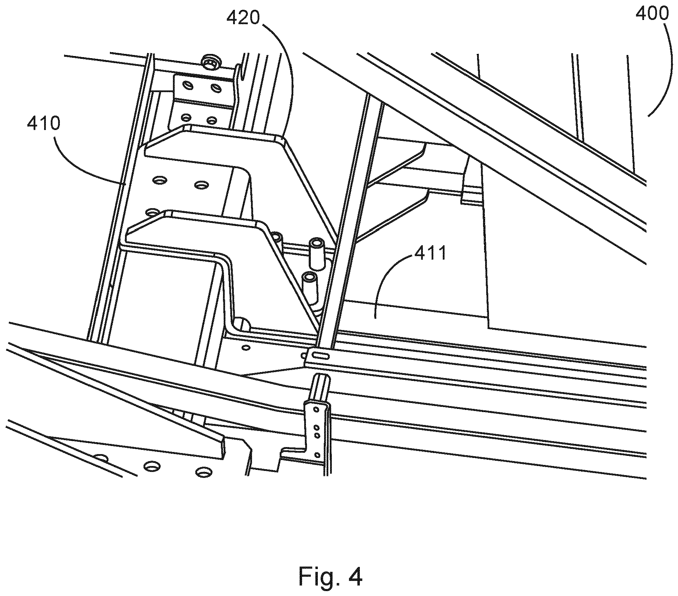

Fig. 4 zeigt eine schematische Ansicht eines Ausschnitts eines Gondelbodens gemäß einem dritten Ausführungsbeispiel. In Fig. 4 ist der Transformator 400 mit den Streben 410 während des Einbaus in die Gondel zu sehen. Der Transformatorboden 410 kann beispielsweise mittels einer Befestigungseinheit 420 in oder an einem Gondelboden 310 befestigt werden. Optional können im Bereich des Gondelbodens 310 mehrere Streben oder Querstreben zur Versteifung des Gondelbodens 310 vorgesehen sein. Die Befestigungseinheiten können hierbei in die Verstrebungen eingreifen, um den Transformator sicher in oder an der zweiten Öffnung 312 zu halten.

Dadurch, dass der Transformatorboden ein Teil des Gondelbodens darstellt, kann er auch als Wärmetauscher verwendet werden, weil der Transformatorboden unmittelbar den Witterungseinflüssen ausgesetzt ist.

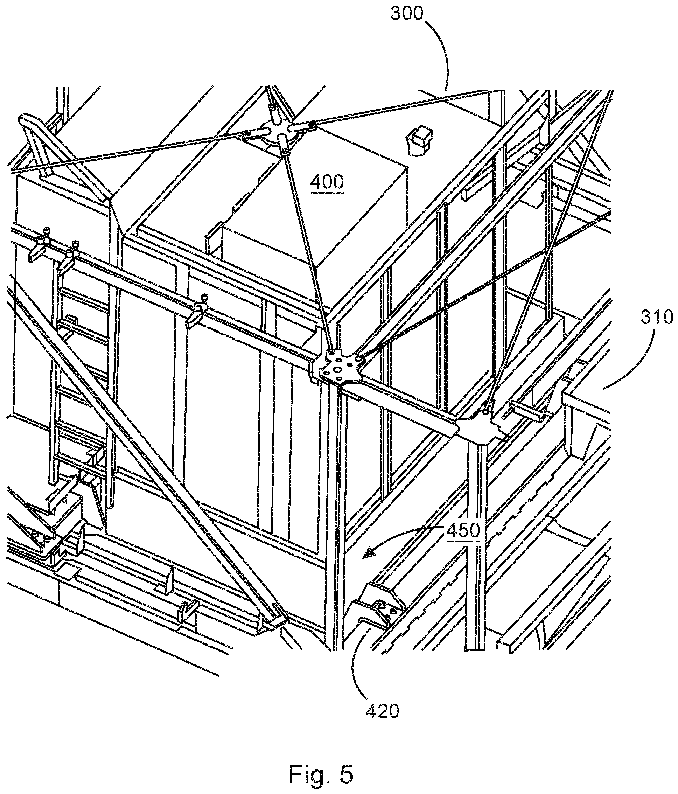

Fig. 5 zeigt eine schematische Darstellung eines Transformators in einer Gondel einer Windenergieanlage. Der Transformator 400 ist innerhalb der Gondel 300 angeordnet. Insbesondere ist der Transformator 400 auf oder an dem Gondelboden 310 beispielsweise mittels Befestigungseinheiten 420 befestigt (wie dies beispielsweise in Fig. 4 dargestellt ist). Der Transformator 400 weist einen Transformatorboden 410 sowie optional eine Transformatorwanne 450 auf. In dem Ausführungsbeispiel von Fig. 5 ist die Transformatorwanne 450 separat zum Transformatorboden 410 ausgestaltet. Alternativ dazu kann der Transformatorboden 410 auch als Transformatorwanne 450 ausgestaltet sein. Der Transformator 400 steht somit innerhalb der Transformatorwanne 450. Dies ist vorteilhaft, weil damit eventuell austretende Flüssigkeiten aus dem Transformator 400 keine Umweltschäden verursachen können, da sie in der Transformatorwanne 450 gesammelt werden können.

Gemäß einem Aspekt der vorliegenden Erfindung kann der Transformator 400 zusammen mit der Transformatorwanne 450 ausgetauscht werden. Ferner kann der Transformator 400 zusammen mit der Transformatorwanne 450 gemäß der Erfindung montiert werden, indem der Transformator 400 zusammen mit der Transformatorwanne 450 durch die zweite Öffnung 312 in das Innere der Gondel 300 befördert wird.

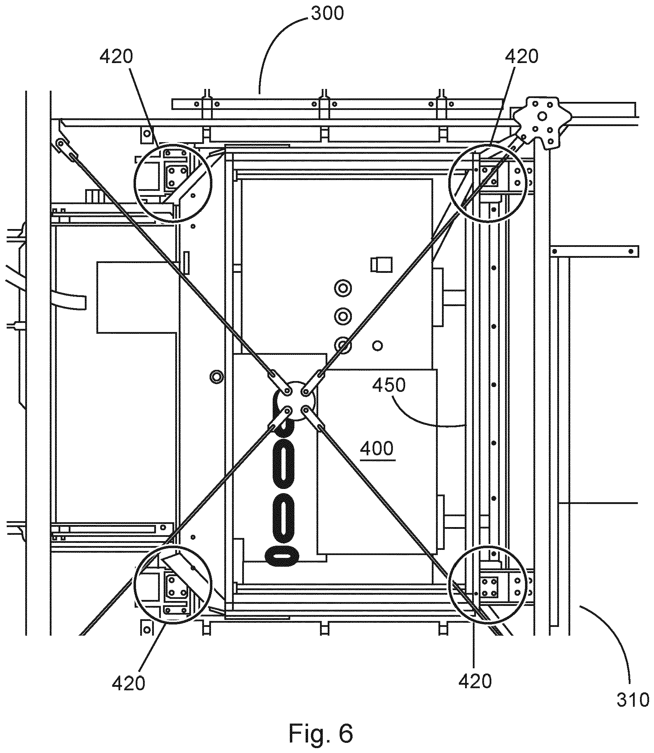

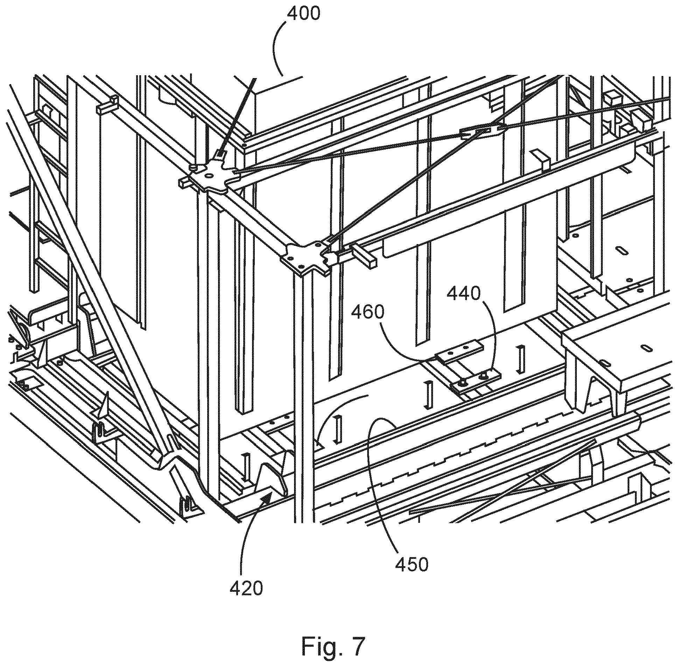

Fig. 6 zeigt eine Draufsicht auf den Transformator innerhalb der Windenergieanlage von Fig. 5 und Fig. 7 zeigt eine schematische Darstellung eines Transformators bei der Montage in einer Gondel einer Windenergieanlage. Der Transformator 400 befindet sich innerhalb einer Transformatorwanne 450. Der Transformator 400 zusammen mit der Transformatorwanne 450 ist mittels Befestigungseinheiten 420 in oder an dem Gondelboden 310 befestigt. Optional können weitere Befestigungsmöglichkeiten für den Transformator 400 in oder an dem Gondelboden 310 vorgesehen sein.

Die Befestigungseinheiten 420 können beispielsweise als Verbindungsflansche ausgestaltet sein. Mittels dieser Verbindungsflansche kann der Transformator 400 an einem Gondelboden 310 befestigt sein. Der Gondelboden 310 kann hierzu optional eine Stahlbaustruktur aufweisen (wie dies beispielsweise in Fig. 4 dargestellt ist). Der Transformator 400 kann eine Mehrzahl von Verbindungsblechen 460 aufweisen, mittels welcher der Transformator 400 unter Verwendung weiterer Bleche 440 beispielsweise an einem Transformatorrahmen 411 innerhalb der Transformatorwanne 450 verschraubt ist.

### Bezugszeichenliste

- 100: Windenergieanlage
- 102: Turm
- 106: Rotor
- 110: Spinner
- 200: Rotorblätter
- 300: Gondel
- 310: Gondelboden
- 311: Öffnung
- 312: Öffnung
- 400: Transformator
- 410: Boden
- 411: Streben
- 420: Befestigungseinheit
- 440: Bleche
- 450: Wanne
- 460: Verbindungsbleche

## Patentansprüche

1. Windenergieanlage (100), mit
einem Turm (102),
einer Gondel (300) auf dem Turm (102),
wobei die Gondel (300) einen Gondelboden (310) mit einer ersten und zweiten Öffnung (311, 312) aufweist,
wobei die erste Öffnung (311) Abmessungen aufweist, die es erlauben, erste Komponenten durchzuführen,
wobei die zweite Öffnung (312) größer als die erste Öffnung (311) ist, und
einem Transformator (400) mit einem Transformatorboden (410) im Inneren der Gondel (300),
wobei die zweite Öffnung (312) Abmessungen aufweist, die es erlauben, den Transformator hindurchzuführen,
wobei der Transformatorboden (410) die zweite Öffnung (312) verschließt, wenn der Transformator (400) in der Gondel (300) montiert ist,
**dadurch gekennzeichnet, dass**
der Transformatorboden (410) mittels Befestigungselementen (420, 410) in oder an dem Gondelboden (310) im Bereich der zweiten Öffnung (312) vorgesehen ist.

2. Windenergieanlage (100) nach Anspruch 1, wobei
die Abmessungen des Transformatorbodens (410) an die Abmessungen der zweiten Öffnung (412) angepasst sind, so dass der Transformator (400) durch die zweite Öffnung (312) in das Gondelinnere angehoben werden kann.

3. Windenergieanlage (100) nach Anspruch 1, wobei
der Transformator (400) eine Wanne (450) aufweist.

4. Verfahren zur Montage eines Transformators (400) in einer Windenergieanlagen-Gondel (300), mit den Schritten:
Anheben eines Transformators (400) mit einem Transformatorboden (410),
Befördern des Transformators (400) durch einen Gondelboden (310) mit einer ersten und zweiten Öffnung (311, 312), wobei der Transformator durch die zweite Öffnung (312) in das Innere der Gondel (300) befördert wird, und
Arretieren des Transformators (400), so dass der Transformatorboden (410) die zweite Öffnung (312) verschließt;
wobei der Transformatorboden (410) mittels Befestigungselementen (420, 410) in oder an dem Gondelboden (310) im Bereich der zweiten Öffnung (312) vorgesehen ist.

## Claims

1. A wind turbine (100), with
a tower (102),
a nacelle (300) on the tower (102),
wherein the nacelle (300) has a nacelle floor (310) with a first and second opening (311,312),
wherein the first opening (311) has dimensions that allow first components to be passed through,
wherein the second opening (312) is larger than the first opening (311), and
a transformer (400) with a transformer floor (410) inside of the nacelle (300),
wherein the second opening (312) has dimensions that allow the transformer to be passed through,
wherein the transformer floor (410) closes the second opening (312) when the transformer (400) has been mounted in the nacelle (300),
**characterized in that** the transformer floor (410) is provided in or on the nacelle floor (310) in the area of the second opening (312) by means of fastening elements (420, 410).

2. The wind turbine (100) according to claim 1, wherein
the dimensions of the transformer floor (410) are adjusted to the dimensions of the second opening (412), so that the transformer (400) can be lifted through the second opening (312) into the nacelle interior.

3. The wind turbine (100) according to claim 1, wherein
the transformer (400) has a tray (450).

4. A method for assembling a transformer (400) in a wind turbine nacelle (300), with the following steps:
lifting a transformer (400) with a transformer floor (410),
conveying the transformer (400) through a nacelle floor (310) with a first and second opening (311, 312), wherein the transformer is conveyed through the second opening (312) into the interior of the nacelle (300), and
locking the transformer (400), so that the transformer floor (410) closes the second opening (312), wherein
the transformer floor (410) is provided in or on the nacelle floor (310) in the area of the second opening (312) by means of fastening elements (420, 410).

## Revendications

1. Eolienne (100) avec
un mât (102),
une nacelle (300) sur le mât (102),
dans laquelle la nacelle (300) présente un fond de nacelle (310) avec une première et une deuxième ouverture (311, 312),
dans laquelle la première ouverture (311) présente des dimensions qui permettent de faire passer des premiers composants,
dans laquelle la deuxième ouverture (312) est plus grande que la première ouverture (311), et
un transformateur (400) avec un fond de transformateur (410) à l'intérieur de la nacelle (300),
dans laquelle la deuxième ouverture (312) présente des dimensions qui permettent de faire passer le transformateur au travers,
dans laquelle le fond de transformateur (410) ferme la deuxième ouverture (312) lorsque le transformateur (400) est monté dans la nacelle (300),
**caractérisée en ce que**
le fond de transformateur (410) est prévu dans la zone de la deuxième ouverture (312) dans ou sur le fond de nacelle (310) au moyen d'éléments de fixation (420, 410).

2. Eolienne (100) selon la revendication 1, dans laquelle
les dimensions du fond de transformateur (410) sont adaptées aux dimensions de la deuxième ouverture (412) de sorte que le transformateur (400) peut être soulevé à l'intérieur de la nacelle par la deuxième ouverture (312) .

3. Eolienne (100) selon la revendication 1, dans laquelle
le transformateur (400) présente une cuve (450).

4. Procédé de montage d'un transformateur (400) dans une nacelle (300) d'éolienne, avec les étapes de :
soulever un transformateur (400) avec un fond de transformateur (410),
transporter le transformateur (400) par un fond de nacelle (310) avec une première et une deuxième ouverture (311, 312), dans lequel le transformateur est transporté à l'intérieur de la nacelle (300) à travers la deuxième ouverture (312), et
fixer le transformateur (400) de sorte que le fond de transformateur (410) ferme la deuxième ouverture (312) ;
dans lequel le fond de transformateur (410) est prévu dans la zone de la deuxième ouverture (312) dans ou sur le fond de nacelle (310) au moyen d'éléments de fixation (420, 410).
